# EUROPEAN PATENT SPECIFICATION

(11) **EP 1 096 983 B1**
(45) Date of publication and mention of the grant of the patent: **07.03.2007**
(21) Application number: 99930694.7
(22) Date of filing: 25.06.1999
(51) Int. Cl.: B01D 29/11, B01D 29/21, B01D 29/23

(54) **FILTER ELEMENT AND METHOD OF MAKING A FILTER ELEMENT**
FILTERELEMENT UND VERFAHREN ZU SEINER HERSTELLUNG
ELEMENT DE FILTRATION ET PROCEDE DE FABRICATION DE CET ELEMENT

(30) Priority: 26.06.1998 US 90909 P
(43) Date of publication of application: 09.05.2001
(73) Proprietor: PALL CORPORATION, East Hills, NY 11548-1209 (US)
(72) Inventor: HARTMANN, Thomas, Huntington Station, NY 11746 (US)
(74) Representative: Knott, Stephen Gilbert
(86) International application number: PCT/US1999/014357
(87) International publication number: WO 2000/000263

(56) References cited:
- EP-A- 0 685 251
- US-A- 4 521 309

## Description

A filter element may include a hollow cylindrical filter pack, where a filter pack may be defined as any structure that includes a filter medium. The interior of the filter pack may be supported by an internal core and the exterior of the filter pack may be supported by an external cage. One or both ends of the filter pack are typically bonded to a closure such as an end cap. The end of the filter pack may be bonded to the end cap by any suitable technique which provides sufficient filter integrity, including melt bonding or the use of a potting material, such as an epoxy, a urethane, or a hot melt adhesive.

Conventional filter elements are disclosed in United States Patents No. 4,228,012 and No. 4,521,309 and European Patent No. EP 0 685 251 B1. United States Patent No. 4,228,012 discloses a filter element supported on the upstream and downstream sides by a rigid core and a sheath. The core has four axial lugs that engage recesses in end caps. United States Patent No. 4,521,39 discloses a filter tube, a castellated core having grooves, and end caps. The end caps are fixedly attached to the core by end cap material which substantially completely fills the grooves at the castellated end of the core. European Patent No. EP 0 685 251 B1 discloses a filter element, a tubular insert, and a mat. The mat seals the end face of the filter element and projects radially inwardly beyond the tubular insert.

When a filter pack is bonded to an end cap, an end portion of the end cap may be liquefied, for example, by heating it until the end portion melts, and the filter pack may be inserted into the molten portion. Alternatively, a liquid potting material may be applied to the end cap and the end of the filter pack may be inserted into the potting material. The liquid bonding material, e.g., either the molten portion of the end cap or the potting material, then solidifies or hardens, forming a bond between the filter pack and the end cap.

In a typical melt bonding and/or potting material bonding, the end of the core and/or the end of the cage may be inserted into the liquid bonding material along with the end of the filter pack. Unfortunately, the end of the core and/or cage then displaces a significant amount of the liquid bonding material. This displaced bonding material may be forced into the bonding area between the end cap and the end of the filter pack, resulting in excess bonding material. The excess bonding material may cause improper bonding and compromise the integrity of the bond between the end cap and the end of the filter pack. The excess bonding material may also be drawn deep into the end of the filter pack, where it may damage or blind the filter medium or bond the filter pack to the core.

The liquid bonding material displaced by the end of the core and/or cage may also be forced onto the outer or inner surfaces of the filter element, where it can resolidify as globules or ridges. Not only are these globules or ridges unsightly; they can also interfere with the fit of the filter element into a housing and with the flow of fluid around and through the filter element.

Another problem with conventional cylindrical filter elements is that pressures exerted on the filter pack at the bond during filtration and backwashing or blowback stress the bond between the filter pack and the end cap. Expansion or contraction of the filter pack due to the effects of temperature and/or moisture can also stress the bond between the filter pack and the end cap. Repeated stress on the bond may cause the bond to fail, allowing unfiltered fluid to bypass the filter pack and contaminate fluid that has been treated by the filter element.

According to one aspect of the invention, a filter element comprises a hollow filter, a core, and an end cap, wherein the filter has an end portion, an inner periphery, and an inner diameter, the core has an end portion and is disposed in the filter, and the end cap and the end portion of the filter are joined at a bond by a bonding material, characterized in that the end portion of the core includes an outer wall having a narrowed edge, an outer diameter that corresponds to the inner diameter of the filter, and an inner surface that forms a recess, wherein the inner periphery of the filter is supported near the bond by the outer wall of the core and solidified bonding material is disposed in the recess.

According to another aspect of the invention, a method of making a filter element comprises inserting an end portion of a filter into a liquid bonding material of an end cap; inserting a narrowed edge of an outer wall of an end portion of a core into the liquid bonding material of the end cap, including directing liquid bonding material into a recess formed by an inner surface of the outer wall; bonding the end portion of the filter to the end cap; and arranging the outer wall of the core to support the inner periphery of the filter near the bond.

According to another aspect of the invention, a filter element comprises a filter, a cage, and an end cap, wherein the filter has an end portion, an outer periphery, and an outer diameter, the cage has an end portion and is disposed around the filter, and the end cap and the end portion of the filter are joined at a bond by a bonding material, characterized in that the end portion of the cage includes an inner wall, an outer wall, and a recess between the inner wall and the outer wall, wherein solidified bonding material is disposed in the recess and wherein the inner wall has an inner diameter that corresponds to the outer diameter of the filter and the outer periphery of the filter is supported near the bond by the inner wall of the cage.

According to another aspect of the invention, a method of making a filter comprises inserting an end portion of a filter into a liquid bonding material of an end cap; inserting an inner wall of an end portion of a cage into the liquid bonding material of the end cap, including directing liquid bonding material into a recess between the inner wall and an outer wall of the cage; bonding the end portion of the filter to the end cap; and arranging the inner wall of the cage to support the outer periphery of the filter near the bond.

The embodiments of the invention represent a considerable advance in the state of the art. A filter element or a method which provides for supporting the periphery of a filter by a wall of a core or cage near the bond and solidifying bonding material in a recess provides for several advantages over the prior art. For example, when the end of a filter pack and the end of the cage and/or core are inserted into the melted region of an end cap or a potting material in an end cap, excess bonding material displaced by the end of the core is not forced into the bonding area nor onto the inner or outer surfaces of the filter element. Rather, the displaced bonding material is contained in the recess of the core and/or cage, enhancing the integrity of the bond and the effectiveness of the filter element.

In addition, because the filter pack is supported by the outer wall of the core and/or the inner wall of the cage near the bond, less stress is placed on the bond between the filter pack and the end cap. Thus, the likelihood of stress failure at the bond and the opportunity for untreated process fluid to leak through a failed bond and contaminate treated fluid are virtually eliminated.
Figure 1 is a side view of one example of a core partially in cross section.
Figure 2 is a top view of the core in Figure 1.
Figure 3 is a cross sectional view along the recess of the core in Figure 1.
Figure 4 is a cross sectional view of a portion of a filter element.
Figure 5 is a cross sectional view along a recess of a second example of a core.
Figure 6 is an isometric cross sectional view along a recess of a third example of a core.
Figures 7a and 7b are side and top views of one example of a cage.
Figure 7c is a cross sectional view along the recess of the cage of Figures 7a and 7b.

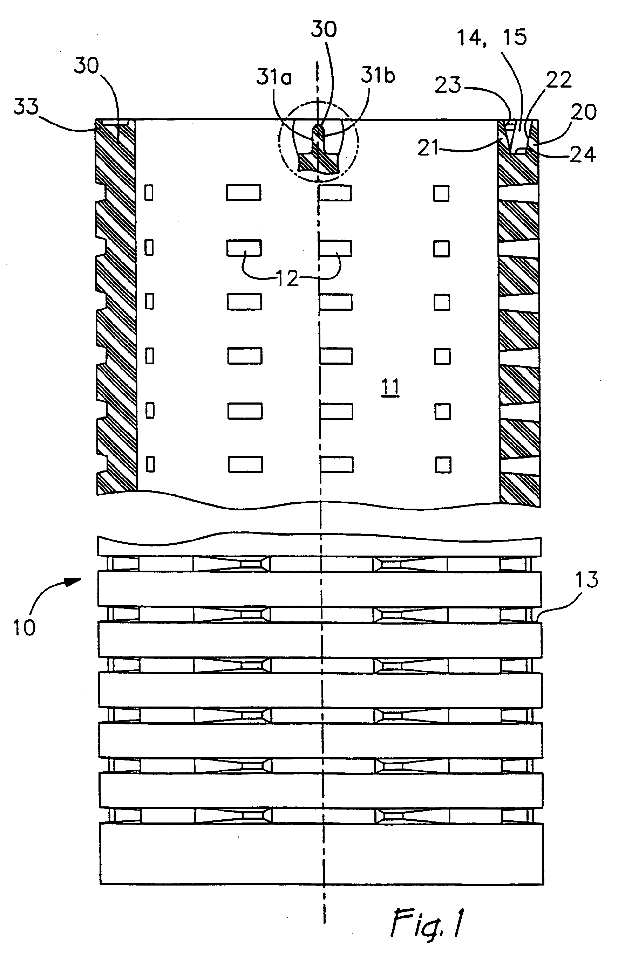

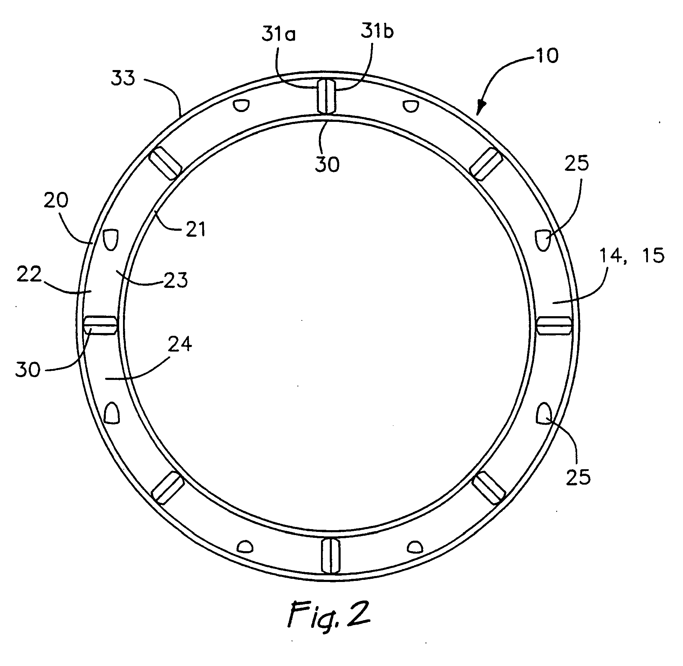

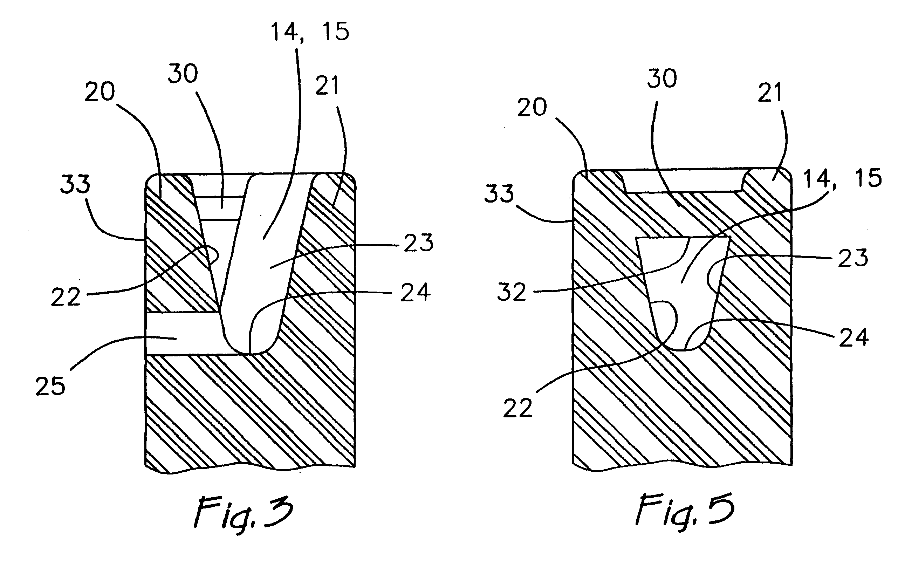

In some embodiments of the invention, the filter element comprises a core disposed in a hollow filter pack and an end cap bonded to the filter pack. As shown in Figures 1-3, the core 10 includes a perforated cylindrical body 11 which may be disposed inside the hollow filter pack to support the filter pack against forces directed radially inwardly through the filter element during filtration and backwashing or blowback. For example, during filtration process fluid may flow generally radially outside-in through the filter through the apertures 12 in the perforated core 10 to the interior hollow portion of the filter and the core 10 and then axially to an outlet at one or both ends of the core 10. Alternatively, during filtration, process fluid may flow generally radially inside-out from the hollow interior through the apertures 12 in the perforated core 10 to the filter pack.

The core body may be configured in a variety of ways. For example, the core body is preferably cylindrical and has a generally circular cross section, but it may alternatively have a polygonal cross section. The core supports the filter pack against pressurized outside-in flow and prevents the element from collapsing inwardly. Consequently, the core preferably has a configuration similar to the filter and an outer diameter that corresponds to the inner diameter of the filter. The core body may have an even, smooth outer surface except for the apertures or the outer surface may have one or more grooves 13 or other textures to channel fluid to or from the apertures. The apertures may have any shape. For example, the apertures may be circular or rectangular shaped. The apertures are spaced sufficiently apart so that fluid may readily pass between the filter pack and the core with little or no pressure drop.

At least one end, and preferably both ends, of the core 10 include a recess 14 where liquid material, such as waste or extraneous material formed during bonding of the end cap to the filter pack, may be confined. The recess 14 may have any suitable configuration. For example, as shown in Figures 1-3, the recess 14 may comprise a groove 15 in the end face at a first end of the core 10. The groove 15 may be defined by an outer wall 20 and an inner wall 21 and may be unbounded on only one side, e.g., the end face of the core 10. Both the outer wall and the inner wall may be the same height or they may have different heights. For example, the inner wall may be shorter than the outer wall. The outer wall and the inner wall may have the same thickness or the thicknesses may differ. For example, the thickness of the outer wall may be greater than the thickness of the inner wall, providing a strong outer wall to support the filter pack. The edges of the inner and outer walls may be flat or inclined and they may be even or textured. The outer wall is preferably continuous while the inner wall may be continuous or discontinuous.

As illustrated in Figures 1-3, both the outer wall 20 and the inner wall 21 have the same height, and the inner surface 22 of the outer wall 20 and the outer surface 23 of the inner wall 21 are each generally continuous. Further, the inner surface 22 of the outer wall 20 and/or the outer surface 23 of the inner wall 21 may be tapered and define a V-shaped groove 15 having a narrow base 24 at the intersection of the inner and outer surfaces 22, 23. In a preferred embodiment, the outer wall 20 has a narrow edge and a tapered inner surface which neatly divides the liquid material at insertion and directs the liquid bonding material at the end of the core inward away from the bonding area between the end cap and the end of the filter pack. However, the groove may have any suitable shape which is capable of receiving and containing liquid bonding material when the core is inserted into the liquid bonding material. For example, the outer and inner surfaces of the inner and outer walls may extend axially parallel to one another to define a generally U-shaped groove having a relatively wider base.

The recess may include a variety of other features. For example, one or more vents may communicate with the recess and allow gas to escape as liquid bonding material flows into the recess. For example, as shown in Figures 1-3, a plurality of vent holes 25 extend through the outer wall 20 of the core 10 near the base 24 of the groove 15. Alternatively or additionally, vents may be located in the inner wall or the base.

An interlock arrangement comprising one or more structures may be formed at one or both ends of the core, preferably in the recess, to aid in the prevention of rotational and/or axial movement of the core relative to the end cap and/or the bonded filter pack. For example, one or more of the inner wall, the outer wall, or the base of the groove may include surface textures, such as bumps, or contoured features, such as indentations, or holes, such as the vents, in or around which the liquid bonding material may solidify. Alternatively, the structures may comprise protrusions, such as partition walls, which extend into the recess and around which the bonding material may solidify. For example, one or more ribs, lands, or walls may protrude into the groove from the outer wall, the inner wall, and/or the base. As shown in Figures 1-3, several partition walls 30 protrude radially inward from the inner surface 22 of the outer wall 20. The partition walls 30 preferably extend radially completely across the groove 15 to the inner wall 21 but may terminate prior to the inner wall 21. Further, the partition walls 30 preferably extend axially from the base 24 all the way, or most of the way, to the edge of the outer and/or inner wall 20,21 and the top edge of each partition wall 30 is preferably tapered. Generally, however, the protrusions are not restricted to any particular shape or orientation. The protrusions may protrude from the outer wall, the inner wall, and/or the base in a direction parallel to or at an angle to the radius and/or the axis of the core.

The interlock arrangement may include one or more regular or irregular surfaces which are arranged to contact solidified bonding material to prevent relative movement between the core and the end cap and/or the bonded filter pack in one or more dimensions, e.g., axially or circumferentially (i.e., in the theta direction of a cylindrical coordinate system). In many embodiments, the interlock arrangement may comprise a protrusion or indentation including one or more surfaces which have a significant circumferential projection and which are arranged to prevent relative rotation between the core and the end cap. For example, in the embodiment illustrated in Figures 1-3, each partition wall 30 includes opposing surfaces 31a,31b which are arranged to face generally circumferentially and prevent relative rotation between the core and the end cap and/or the bonded filter pack when the surfaces contact solidified bonding material.

At least one end, and preferably both ends, of the core include an outer wall structure which is dimensioned to support the inner periphery of the filter pack in the vicinity of the bond between the filter pack and the end cap. The outer wall structure may be configured in a wide variety of ways. For example, as shown in Figures 1-3, the outer wall structure at an end of the core 10 may comprise a continuous outer wall surface 33 having an outer diameter which corresponds to the inner diameter of the inner periphery of the filter pack at the end. A continuous outer wall surface 33 enables the end of the core 10 to completely support the entire inner circumference of the filter pack in the vicinity of the bond between the filter pack and the end cap. Consequently, a continuous outer surface is preferred. However, discontinuities in the outer wall structure may be provided so long as the inner periphery of the filter pack in the vicinity of the bond between the end cap and the filter pack is substantially supported. Supporting the end of the filter pack in the vicinity of the bond serves to relieve and/or prevent undue stress on the bond during filtration and/or backwashing. As a result, the bond between the filter pack and the end cap is less likely to fail, reducing the likelihood that untreated fluid may bypass the filter pack.

The core may comprise any sufficiently rigid material which is compatible with the fluid to be processed and which has sufficient structural integrity to support the filter pack. For example, the core may be made of a thermoplastic resin, a metal mesh, a perforated sheet of metal such as steel or aluminum, a porous ceramic or any one of a number of porous rigid materials adapted to form a support for a cylindrical filter element. Polymeric materials are preferred. Particularly preferred is a core made of polypropylene or polyethylene. Additionally, the cylindrical body 11 of the core 10 is preferably perforate and includes apertures directing fluid through the cylindrical body 11 to or from the hollow interior of the cylindrical body. However, the cylindrical body may be fashioned from a porous material as, for example, a hollow or solid porous cylinder or from an impervious, imperforate material having channels formed in its outer surface. Each of these cores is preferably arranged to not only support the filter pack but also provide little or no pressure drop for fluid flowing through the filter element.

The core may be fashioned in a wide variety of ways. For example, the core may be injection molded, it may be extruded, or it may be machined. The core may preferably comprise a unitary, one-piece structure. Alternatively, the core may comprise a multiple piece structure, e.g., an integral two or three piece structure in which, for example, the cylindrical body of the core is injection molded and one or two separately molded or machined end pieces containing the grooves and the continuous outer wall surface are fixed to the ends of the body, for example, by welding or bonding. Rather than being fixed to the body, the end pieces may be coupled to the ends of the body in a manner which allows the end pieces to move axially and/or rotationally with respect to the body.

The shape of the filter pack is preferably cylindrical and hollow. The filter pack may be configured in a variety of ways. For example, it may comprise a hollow or solid fibrous mass, or helically wrapped layers of a filter medium and/or a drainage material. Preferred, however, is a hollow, pleated configuration. An example of a suitable pleated configuration for the filter pack may be a cylindrical configuration having a straight radial pleat design. More preferred is a pleated filter having a laid-over configuration, as disclosed, for example, in U.S. Patent No. 5,543,047.

Various types of filter media may be used with the present invention. The filter media used in the filter element may include any material capable of forming a porous structure suitable for filtering liquids or gases, including porous metal media, porous ceramic media, porous media comprising organic and/or inorganic fibers such as carbon and/or glass fiber media, and/or porous polymeric media. The filter media may include fibrous media such as a mass of fibers, fibrous mats, woven or non-woven fibrous sheets, and fibrous depth filters made by a variety of means including melt blowing, Fourdrinier deposition, or air laying fibrous materials. In addition, the filter media may include a porous film or membrane. The porous filter media of the present invention are not restricted to any particular pore sizes or structures. Microporous and ultraporous media are preferred. Additionally, the filter medium may comprise one of more layers, each layer having the same or different filtering characteristics. For example, the filter medium may comprise two or more layers. One of the layers, preferably an upstream layer, may be more coarse than the other layer, thereby serving as a prefilter.

The filter pack may also contain one or more additional layers such as upstream and/or downstream drainage layers and a cushioning layer. The upstream and downstream drainage layers are disposed on the upstream and downstream surfaces of the filter medium, respectively. The upstream and downstream drainage layers can be made of any materials having suitable edgewise flow characteristics, i.e. suitable resistance to fluid flow through the layer in a direction parallel to its surface. The edgewise flow resistance of the drainage layer is preferably low enough that the pressure drop in the drainage layer is less than the pressure drop across the filter medium, thereby providing an even distribution of fluid along the surface of the filter medium. The drainage layers can be in the form of a mesh or screen or a woven or non-woven porous sheet.

The cushioning layer may be disposed between the filter medium and one or both of the drainage layers. The cushioning layer helps prevent abrasion of the filter medium due to rubbing contact with the drainage layers during pressure fluctuations of the fluid system in which the filter is installed. The cushioning layer is preferably made of a material smoother than the drainage layers and having a higher resistance to abrasion than the filter medium. An example, of a suitable cushioning layer may be a polymeric non-woven fabric.

The filter element may have one or more closures, including end caps such as open end caps, blind end caps, and joiner caps, bonded to the filter pack. The end caps may be fashioned from any suitably impervious material, such as a metallic, ceramic, or polymeric material, which is compatible with the material to be filtered. For example, the end cap material may be a metal such as aluminum, stainless steel, or carbon steel or a ceramic or even a fiber reinforced product such as fiberglass reinforced polypropylene, polyamide, such as nylon, or polyester resin. Preferably, the end cap is made from a polymeric material such as polypropylene, polyamide (e.g., nylon), or a polyester. The end cap need not be made of the same material as the core.

The end caps may be of any desired configuration, appropriate to the requirements of the filter pack and the filter element. Usually, at least one of the end caps will be provided with an aperture to allow flow of filtered fluid from or unfiltered fluid to the interior of the filter element. In many instances, both end caps will be apertured, particularly where a plurality of filter elements are to be connected together at joiner caps to form a long tubular element.

The core, the filter pack, and the end cap may be assembled to form the filter element in a wide variety of ways. For example, the filter pack and the core may be arranged to contact one another such that at least in the vicinity of one end, or preferably both ends, the inner periphery of the filter pack intimately faces or contacts the outer wall structure of the core, the outer wall structure having an outer diameter corresponding to the inner diameter of the filter pack. The end cap may be bonded to the filter pack, the liquid bonding material flowing into and being contained in the recess of the core and/or contacting the interlock arrangement.

The inner periphery of a filter pack may be contacted with the core in a variety of ways. For example, the filter pack may be positioned so that the core may be inserted in the inner hollow portion of the filter pack, or the core may be positioned so that the filter pack may be slid over the core. In the vicinity of one end, preferably both ends, the inner periphery of the filter pack contacts the outer wall structure of the core. The outer wall structure of the core and the inner periphery of the filter pack contact one another when they are in actual physical contact or when they are sufficiently proximate that the core supports the filter pack.

The filter pack may be bonded to an end cap in any suitable manner which prevents fluid bypass. For example, the ends of the filter element may be bonded to the end caps by a potting material, e.g., a bonding agent such as an adhesive, a solvent, an epoxy, a urethane, or a silicone. As another example, the filter element may be bonded to the end cap by melt bonding. Melt bonding and the use of potting material are preferred methods, but less preferred methods include spin welding and sonic welding.

In melt bonding, a thermoplastic end cap may be heated to liquefy one entire surface or more preferably a region, such as an annular region, of one surface of the end cap, forming a softened or molten plastic. One end of the filter pack and core may be placed into the liquefied plastic of the end cap, where the liquid plastic flows into the interstices of the filter pack. When the plastic solidifies, the filter pack is securely joined to the end cap. A conventional melt bonding method is disclosed in U.S. Patent No. 3,457,339.

In potting, a potting material is placed on one surface or in a cavity of the end cap, a potting material being a material that is liquid under filter pack assembly conditions but solid or firm under normal operating conditions. Typically this may be a hot melt adhesive, a molten polymer, a plastisol, an epoxy resin, a wax, a urethane, a silicone, a liquid polymer or elastomer that can quickly be cured to a solid or firm state, or some such similar material. One end of the filter pack and core may be placed in the potting material on the end cap, where the potting material flows into the interstices of the filter pack. When the potting material solidifies, e.g., hardens or firms up, the filter pack is securely joined to the end cap, sealing the end of the filter pack to the end cap.

When the end of the filter pack and the end of the core are inserted into the liquid bonding material, e.g., the molten portion or the end cap or the potting material, the liquid bonding material displaced by the end of the core is preferably not forced into the bonding area between the end of the filter pack and the end cap. Rather, liquid bonding material displaced by the end of the core is directed to and contained in the recess and/or around the interlock arrangement at the end of the core. In particular, the narrow edge of the outer wall of the core slices into, divides and separates the liquid bonding material at the end of the filter pack from the liquid bonding material at the end of the core. The inner surface of the outer wall, especially a tapered inner surface, directs the liquid bonding material at the end of the core away from the bonding area between the end of the filter pack and the end cap. Thus, the liquid bonding material at the end of the core is not forced into the bonding area, where as excess bonding material it can compromise the integrity of the bond between the filter pack and the end cap. Nor is it forced far up into the filter pack or between the filter pack and the core where it can damage or blind the filter medium or bond the core directly to the filter pack. Rather, the liquid bonding material at the end of the core is directed into the recess and/or around the interlock arrangement at the end of the core, where it is contained. Gas, such as air, in the recess may be vented through the vents, e.g., the vent holes, as the liquid bonding material flows into the recess. Once the liquid bonding material solidifies, not only is the filter pack securely bonded to the end cap but the bonding material displaced by the core material is neatly confined in the recess and/or around the interlock arrangement. By confining the bonding material at the end of the core, little or none of the bonding material solidifies as globules or ridges on the inner surfaces of the end cap or the inner surfaces of the body of the core.

As described above, the ends of the filter pack and the core are preferably simultaneously inserted into the molten plastic of the end cap or into the liquid potting material. Alternatively, the end of the filter pack and core may be positioned adjacent to the end cap, and then the end cap may be heated or the liquid potting material may be applied to the end cap and the filter pack. In another alternative, the end of the filter pack may be inserted into the molten plastic of the end cap or into the liquid potting material, and then the core may be inserted into the hollow interior of the filter pack and into the molten plastic of the end cap or the liquid potting material. In still another alternative, the end of the filter pack may be positioned adjacent to the end cap, the end cap may be heated or the liquid potting material may be applied to the end cap and the filter pack, and then the core may be inserted into the hollow interior of the filter pack and into the molten plastic of the end cap or the liquid potting material. In each case, the inner periphery of the filter pack is supported by the core in the vicinity of at least one end, and the filter pack is bonded to the end cap. Any liquid bonding material at the end of the core will flow into the recess of the core and/or around the interlock arrangement, where it is contained, and gas may be vented through the vent holes.

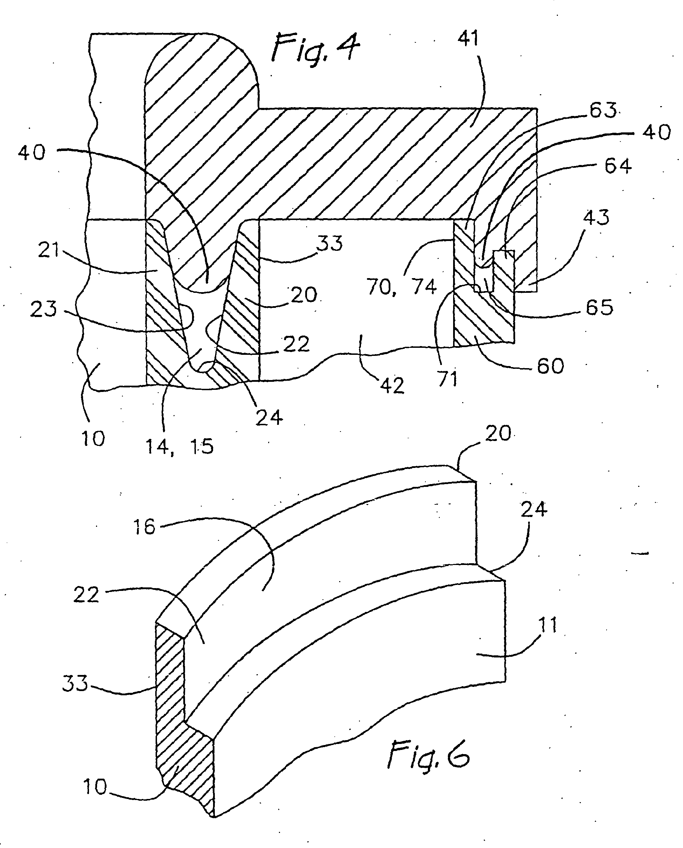

In the embodiment of the filter element illustrated in Figure 4, liquid bonding material produced during the bonding of the end cap 41 to the filter pack 42 was directed into the recess of the core 10, i.e., the groove 15, by the outer and inner walls 20, 21 of core 10. Vent holes 25 communicating with groove 15 allowed air to vent from the groove 15 as the liquid material at the end of the core 10 entered the groove 15. When bonding material 40 cooled or hardened, it solidified and was confined in the recess of the core 10 and around the partition walls 30.

The size of the recess, e.g., the height and/or width of the groove, may vary depending on many factors, including the volume of the bonding material to be contained in the recess. This, in turn, depends, for example, on the bonding technique used to join the end cap to the filter pack. In spin welding, very little melt is produced and much of it is forced radially outwardly due to centrifical force. Consequently, the recess of the core may be sized relatively small to accommodate the relatively small volume of material. In potting, the volume of potting material applied to the end cap and the filter pack may be closely controlled. Consequently, the recess of the core may be intermediately sized to accommodate a small to intermediate volume of bonding material. In melt bonding , the volume of molten plastic produced is more variable. Consequently, the recess of the core may be sized relatively large to accommodate a potentially large volume of bonding material. Regardless of the bonding technique, the recess may be oversized for the volume of bonding material available to the recess, allowing the bonding material to be more fully contained within the recess. Alternatively, the recess may be undersized for the volume of bonding material available to the recess, allowing the bonding material to more fully contact the interlock arrangement, for example, by forcing the bonding material into and through holes, such as the vents. For example, the volume of the recess may be R times the volume of the bonding material available to the recess, where R is any rational number less than or equal to about 5 and greater than or equal to about .5. Thus, the volume of the recess may be about 5 or about 3 or about 2 or about 1.5 or about .75 times the volume of bonding material available to the recess.

In each of the embodiments of the invention, at least one end, and preferably both ends, of the filter pack are bonded to the end cap in a manner that fixes and substantially seals the filter pack to the end cap. The core, on the other hand, may be arranged with the end cap either in a manner which fixes the core to the end cap or in a manner which allows the core to move or float relative to the end cap in one or more dimensions, e.g., axially or circumferentially.

The end of the core may be fixed to the end cap at the same time, or at a different time, and in the same manner, or in a different manner, that the end of the filter pack is fixed to the end cap. For example, the core may be made of a material which is similar to or which has a lower melting point than the end cap. Inserting the end of the core into the molten plastic of the end cap, either before or after but preferably as the end of the filter pack is inserted into the molten plastic, may cause portions of the end of the core to melt. Thin portions of the core, such as thin walls, tips, or other thin core structures, are particularly prone to melting. When the melt, including both molten end cap and molten core portions, solidifies, the core, filter pack, and end cap may all be fixed to one another.

Alternatively, the core and the end cap may be fixed to one another by a potting material which bonds the core and the end cap. Again, the end of the core may be inserted into the potting material either before or after but preferably as the end of the filter pack is inserted into the potting material. When the potting material solidifies, hardens, or otherwise firms up, the core, filter pack, and end cap may all be fixed to one another.

The interlock arrangement, such as the partition walls 30, may supplement the fixed bond between the end cap and the core. For example, the partition walls 30 may each include a generally circumferentially facing surface, preferably a pair of oppositely disposed circumferentially facing surfaces 31a, 31b. As the liquid bonding material at the end of the core 10 flows into the recess, it flows along the partition walls 30 adjacent to the opposite circumferentially facing surfaces 31a, 31b. When the bonding material 40 solidifies, it forms correspondingly circumferentially facing surfaces intimately facing or contacting the circumferentially facing surfaces 31a, 31b of the partition walls 30. Thus, these facing and/or abutting surfaces of the partition walls 30 and the solidified bonding material are not only bonded to one another but are also arranged to mechanically resist any rotational movement of the end cap clockwise or counter clockwise with respect to the core.

Instead of being fixed to the end cap, the core may not be bonded to the end cap but may be arranged with the end cap in a manner which allows the core to move or float with respect to the end cap in one or more dimensions. This may be preferable where the filter pack has a different coefficient of expansion than the core. For example, a nylon filter medium expands axially due to the effects of moisture and/or temperature much more than a polypropylene core. This expansion is most pronounced in a densely pleated filter pack, such as a filter pack having a laid-over configuration. If the filter pack and the polypropylene core are both fixed to the end cap, the nylon filter medium may buckle outwardly as it expands, stressing the bond between the end cap and the filter pack. Consequently, it is frequently preferable to fix the filter pack to the end caps but allow the core to float axially with respect to one or both end caps.

While it may be preferable to allow the core to float axially with respect to one or both end caps, it is frequently desirable to prevent relative rotational movement between the core and the end caps. For example, one end cap, often the open end cap, may include a fitting which mechanically interlocks the filter element with the housing. The fitting is rotated by grasping the opposite end cap, often the blind end cap, and twisting it one direction or the other. Torque is preferably transmitted from the blind end cap to the open end cap along the core rather than along the filter pack. Transmitting torque along the filter pack can stress the bond at one or both end caps and potentially compromise the integrity of the seal between filter pack and the end caps. To provide for torque transmittal along the core, the core and the end caps are preferably arranged to prevent relative rotation between them.

Thus, the core may be arranged with one or both end caps to float axially but not circumferentially. For example, the core may be made of a material which has a higher melting point than the end cap. Inserting the core into the molten plastic of the end cap does not melt any portion of the core. Consequently, when the melt solidifies, the core and the end cap may not be bonded to one another. Alternatively, the core may be made of a material that does not bond to the potting material. Inserting the core into the potting material and allowing the potting material to solidify may not bond the core to the end cap.

Further, as shown in Figures 1-3, the core may also include an interlock arrangement having opposite circumferentially facing surfaces 31a,31b but no undercut axially facing surfaces. Not only is the core then not bonded to the end cap, but the interlock arrangement does not prevent axial movement of the core with respect to the end cap or the filter pack, because the interlock mechanism does not have any undercut axially facing surfaces which could abut solidified bonding material and mechanically prevent axial movement between the core and the end cap. Consequently the core is free to slide axially with respect to the end cap(s) and the filter pack. However, the core and the end cap rotate together because the solidified bonding material abuts the oppositely disposed circumferentially facing surfaces 31a,31b of the interlock arrangement, mechanically preventing any clockwise or counterclockwise movement of the end cap or filter pack with respect to the core. Torque may then be conveniently transmitted from one end cap along the core to the opposite end cap.

In alternative embodiments, the interlock arrangement may include one or more undercut surfaces having a significant axial projection as well as circumferentially facing surfaces. For example, as shown in Figure 5, the partition walls 30 may each include a generally axially facing undercut surface 32 in addition to the oppositely facing circumferential surfaces 31a,31b. As the liquid bonding material at the end of the core 10 flows into the recess it also flows along and under the partition walls 30 adjacent to the opposite circumferentially facing surfaces 31a,31b and the axially facing undercut surface 32. When the bonding material solidifies, it forms corresponding circumferentially facing surfaces and axially facing surfaces intimately facing or contacting the circumferentially facing surfaces 31a,31b and the axially facing surface 32, respectively, of the partition wall 30. The axially facing and abutting surfaces of the partition walls 30 and the solidified bonding material mechanically resist any movement of the end cap away from the core while the circumferentially facing and abutting surfaces mechanically resist any rotational movement of the end cap with respect to the core.

In other alternative embodiments, the interlock arrangement may include one or more undercut axially facing surfaces but no circumferentially facing surfaces. If the core does not bond to the end cap, the end cap and the filter pack may then be able to move circumferentially but not axially with respect to the core. In other embodiments, the core may not include any interlocking arrangement. If the core does not bond to the end cap, the end cap and filter pack may then be free to move both circumferentially and axially with respect to the core. In still other embodiments the vents may function as the interlock arrangement and restrict axial and/or rotational movement of the core with respect to the filter pack and the end cap. Liquid overflow material may flow into and completely or partially fill the vents. When the overflow material solidifies, the solidified overflow material may abut any axially facing surfaces and/or circumferentially facing surfaces of the vents, restricting the axial and rotational movement of the core relative to the filter pack and the end cap.

Although the core may be arranged to float, e.g., axially, with respect to one or both end caps, the core, the end cap(s), and the filter pack are preferably arranged such that the outer wall structure of the core always supports the filter pack at the bond. This may be accomplished in any suitable manner. For example, the end of the core and the end of the filter pack may be offset such that the end of the core extends beyond the end of the filter pack. The offset distance may be designed to be greater than the maximum distance that the core is expected to float away from the end cap. Alternatively, or additionally, the depth of the bond (i.e., the depth that the filter pack is inserted into the molten plastic or the potting material) may be designed to be greater than the maximum distance that the core is expect to float away from the end cap. In any event, as the core floats axially with respect to the end cap, the outer wall structure of the core preferably always supports the filter pack at the bond with the end cap against the inwardly directed forces of the process fluid.

While the overflow recess shown in Figures 1-3 comprises a groove 15 defined by outer and inner walls 20, 21, the overflow recess may be differently configured. For example, the overflow recess shown in Figure 6 comprises an annular space 16 defined by an outer wall 20 and a base 24 of the core 10. The inner surface 22 of the outer wall 20, which may extend parallel to the axis of the core, has an inner diameter greater than the minimum inner diameter of the interior of the core 10, e.g., the inner diameter of the body of the core. However, the inner wall is eliminated and the space 16 is unbounded on two sides, e.g., at the end face and radially inwardly. Otherwise, features of the core 10, including the outer wall 20 and the interlock arrangement, may be identical to many of the embodiments of the core previously described.

The method for applying the core 10 of Figure 6 to an end cap may be similar to the method of applying any of the previous embodiments of the core to an end cap. However, when the core 10 of Figure 6 is arranged against the end cap, e.g., inserted into the molten plastic or the potting material, a retainer post is preferably disposed inside the core 10. The retainer post preferably has an outer diameter substantially equal to the inner diameter of the core 10 at the open edge of the base 24. The retainer post may extend axially to or beyond the end of the outer wall 20 and may be formed from a material which does not bond to the end cap or the potting material. Consequently, the retainer post prevents the bonding material from flowing radially inside the edge of the base 24, maintaining the bonding material within the recess. However, the retainer post may be conveniently removed after the bonding material solidifies.

Although the present invention has been described in terms of several exemplary embodiments which include a core, it is not limited to those embodiments. For example, the filter element may include a cage disposed around the exterior of the filter pack with or without a core disposed in the interior of the filter pack. Thus, the filter element may comprise a hollow fiber unit where the filter pack includes a plurality of hollow fibers extending from one or more end elements. A cage may be joined to the end element(s) and disposed around the hollow fiber filter pack to protect the hollow fibers. However, the filter element need not include a core.

A cage serves to protect the filter pack during handling and to support the filter pack against forces directed inside-out through the filter element during filtration and backwashing or blowback. The cage, which may be thinner than the core, nonetheless may include a perforated cage body and at one or both ends of the cage an inner wall, an outer wall and a recess between the inner wall and the outer wall. The inner and outer walls of the cage are analogous to the previously described outer and inner walls, respectively, of the core, and the features previously described with respect to the core may also be features of the cage, with this reversal in geometry. For example, the inner wall of the cage includes an inner wall structure which is dimensioned to support the outer periphery of the filter pack in the vicinity of the bond between the filter pack and the end cap. The outer wall of the cage may have a height less than or equal to the height of the inner wall. The recess of the cage may have any suitable shape between the inner and outer walls, including a V-or a U-shaped configuration. Further, the cage may include an interlock arrangement and/or vents at one or both ends of the cage, preferably in the recess. The cage may be bonded to the end cap(s) as preciously described with respect to the core, and the cage may be mechanically fixed to the end cap(s) or may float in one or more dimensions as previously described with respect to the core. The cage may be formed from any of the materials using any of the techniques previously described with respect to the core. Thus, the present invention is also directed to a filter element which comprises a cage disposed around a hollow filter pack and an end cap bonded to the filter pack.

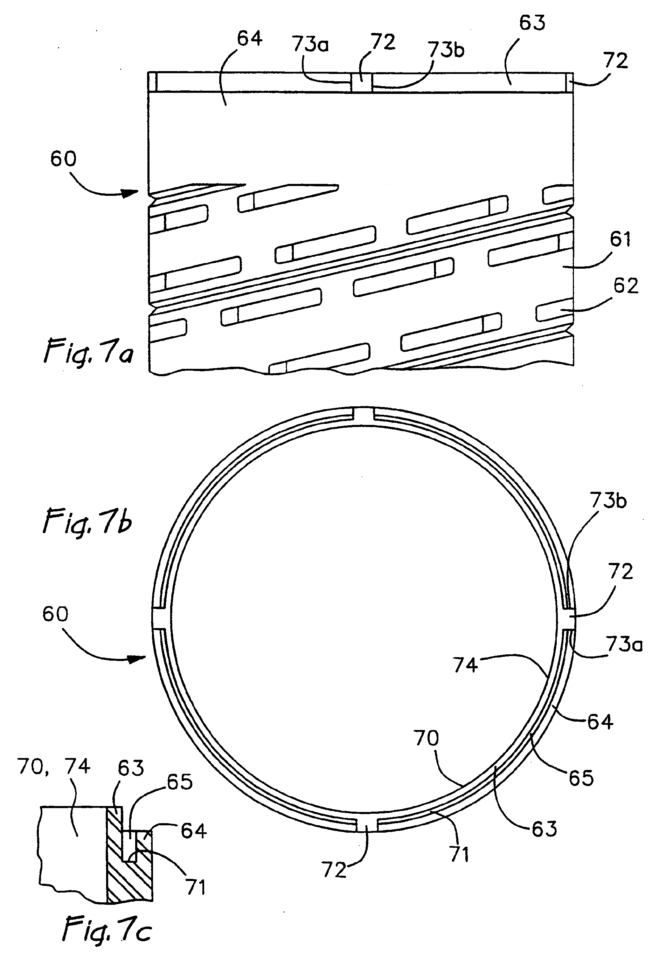

One example of a cage 60 is shown in Figures 4, 7a, 7b, and 7c. The cage 60 includes a cylindrical perforated polymeric body 61 having apertures 62. At least one end, and preferably both ends, of the cage 60 include an inner wall 63, an outer wall 64, and a recess 65 between the inner and outer walls. The inner wall 63 includes an inner wall structure 70, and the outer wall 64 is preferably less high than the inner wall 63. The recess 65 preferably has a U-shaped configuration defined between the inner wall 63, the outer wall 64 and a base 71.

The cage 60 further comprises an interlock arrangement which includes one or more ribs or lands 72. The ribs 72 extend radially outwardly from the inner wall 70 to the outer wall 64 and axially from the top of the inner wall 63 to the base 71. Thus, each rib has oppositely disposed circumferentially facing surfaces 73a,73b but preferably no undercut axially facing surface. The inner wall structure of the cage 60 preferably comprises a continuous inner wall surface 74 having an inner diameter which corresponds to the outer diameter of the outer periphery of the filter pack in the vicinity of the end.

The cage, the filter pack, and the end cap may be assembled to form a filter element according to any of the techniques previously described with respect to the core, the filter pack, and the end cap. For example, the cage and the filter pack may be arranged to contact one another such that at least in the vicinity of one end, and preferably both ends, the inner wall structure of the cage supports and/or contacts the outer periphery of the filter pack. The end of the filter pack and the end of the cage may be inserted into the liquid bonding material. The liquid bonding material displaced by the end of the cage is not forced into the bonding area between the end of the filter pack and the end cap as excess bonding material. Rather, the narrow edge of the inner wall of the cage slices into, divides, and separates the liquid bonding material at the end of the filter pack from the liquid bonding material at the end of the cage. The outer surface of the inner wall directs the liquid bonding material away from the bonding area, neatly confining it in the recess and/or around the interlock arrangement. The cage may be arranged with the end cap either in a manner which fixes the cage to the end cap or in a manner which allows the cage to move or float relative to the end cap in one or more dimensions, e.g., axially or circumferentially. In particular, fixing the cage at least mechanically to prevent relative rotation between the cage and the end cap allows torque to be transmitted from one end cap to the other via the cage.

In the embodiment of the filter element illustrated in Figure 4, the liquid bonding material was directed into the recess 65 and around the ribs 72. When the bonding material 40 solidified, it was confined in the recess and formed circumferentially facing surfaces intimately facing or contacting the circumferentially facing surfaces of the ribs 72. Preferably, the nature of the bonding material and the cage is such that the cage does not bond to the bonding material. The circumferentially facing surfaces of the solidified bonding material and the ribs abut one another and mechanically resist any rotational movement of the end cap clockwise or counterclockwise with respect to the cage, but the cage is free to float axially with respect to the end cap. An outer flange section 43 of the end cap 41 may be provided. The flange 43 and the outer wall 64 prevent the bonding material from flowing radially outside the cage 60. Preferably, the flange section 43 is not removed after the bonding material solidifies and remains as a portion of the end cap 41.

Filter elements embodying the invention may include a cage but no core or a core but no cage. Many embodiments, however, preferably include both a cage and a core. With the inner wall structure of the cage and the outer wall structure of the core completely supporting the end(s) of the filter pack for 360°, a highly uniform pack end is presented to the liquid bonding material. Further, none of the liquid bonding material at the end of the cage or the end of the core is directed into the bonding area as excess bonding material, enhancing the integrity of the bond between the end of the filter pack and the end cap.

Although the present invention has been described in terms of exemplary embodiments, it is not limited to these embodiments. For example, in bonding the end of the filter pack to the end cap, tooling may be substituted for the core and/or the cage. In one embodiment, an inner cylindrical tool may be inserted into the interior of the filter pack and/or an outer cylindrical tool may be slid along the exterior of the filter pack. The inner cylindrical tool may have an outer wall structure including a narrow edge and an outer diameter corresponding to the inner diameter of the filter pack. The outer cylindrical tool may have an inner wall structure having a narrow edge and an inner diameter corresponding to the outer diameter of the filter pack. The narrow edge of the inner cylindrical tool, the end of the filter pack, and the narrow edge of the outer cylindrical tool may be inserted into the liquid bonding material, where the narrow edges of the inner and outer cylindrical tools slice into, divide, and separate the liquid bonding material. Liquid bonding material at the end of the inner cylindrical tool and the end of the outer cylindrical tool is thus directed away from the bonding area by the narrow edges of the cylindrical tools, preventing excess bonding material from being forced into the bonding area. The cylindrical tools are preferably formed from a material that does not bond to the liquid bonding material or to the end cap. Consequently, once the liquid bonding material solidifies, the cylindrical tools may be removed, leaving a high integrity bond between the filter pack and the end cap.

Clearly, alternative embodiments, examples, and modifications which would still be encompassed by the invention may be made by those skilled in the art, particularly in light of the foregoing teachings. For example, the present invention encompasses the combination of one or more features of any of the embodiments previously described or illustrated with the features of the other embodiments. The present invention also encompasses any of the embodiments previously described or illustrated where one or more features of the embodiment are modified or deleted. Therefore, the following claims are intended to cover any alternative embodiments, examples, modifications, or equivalents which may be included within the spirit and scope of the invention as defined by the claims.

## Claims

1. A filter element comprising a hollow filter (42), a core (10), and an end cap (41), wherein the filter (42) has an end portion, an inner periphery, and an inner diameter, the core (10) has an end portion and is disposed in the filter (42), and the end cap (41) and the end portion of the filter (42) are joined at a bond by a bonding material, **characterized in that** the end portion of the core (10) includes an outer wall (20) having a narrowed edge, an outer diameter that corresponds to the inner diameter of the filter (42), and an inner surface (22) that forms a recess (14), wherein the inner periphery of the filter (42) is supported near the bond by the outer wall (20) of the core (10) and solidified bonding material (40) is disposed in the recess (14).

2. The filter element of claim 1 wherein the inner periphery of the filter (42) contacts the outer wall (20) of the core (10) at the bond.

3. The filter element of any preceding claim wherein the core (10) is bonded to the end cap (41).

4. The filter element of claim 1 or 2 wherein the core (10) is not bonded to the end cap (41).

5. The filter element of any preceding clam wherein the end portion of the core (10) further includes an inner wall (21) and the recess (14) is positioned between the outer wall (20) and the inner wall (21).

6. The filter element of any preceding claim wherein the recess (14) is unbounded at the end face of the core (10).

7. The filter element of any preceding claim wherein the outer wall (20) is continuous.

8. The filter element of any preceding claim the end portion of the core (10) further includes a vent (25) communicating with the recess (14).

9. The filter element of any preceding claim wherein the end portion of the core (10) further includes an interlock arrangement (30).

10. The filter element of claim 9 wherein the interlock arrangement (30) and the solidified bonding material (40) in the recess (14) are arranged to prevent relative movement between the core (10) and the end cap (41) in the circumferential direction.

11. The filter element of any preceding claim wherein the inner surface (22) of the outer wall (20) tapers to the narrowed edge.

12. A method of making a filter element comprising:
inserting an end portion of a filter (10) into a liquid bonding material of an end cap (41);
inserting a narrowed edge of an outer wall (20) of an end portion of a core (10) into the liquid bonding material of the end cap (41), including directing liquid bonding material into a recess (14) formed by an inner surface (22) of the outer wall (20);
bonding the end portion of the filter (42) to the end cap (41); and
arranging the outer wall (20) of the core (10) to support an inner periphery of the filter (42) near the bond.

13. The method of claim 12 further comprising forming the liquid bonding material by melting a portion of the end cap (41).

14. The method of claim 12 further comprising forming the liquid bonding material by applying a potting material to the end cap (41).

15. The method of claim 12, 13 or 14 further comprising solidifying bonding material (40) in the recess (14) of the core (10).

16. The method of claim 15 wherein solidifying bonding material includes solidifying bonding material adjacent to an interlock arrangement (30).

17. The method of any of claims 12-16 further comprising bonding the core (10) to the end cap (41).

18. The method of any of claims 12-16 further comprising not bonding the core (10) to the end cap (41).

19. The method of any of claims 12-18 further comprising venting gas from the recess (14) of the core (10) as the liquid bonding material is directed into the recess (14).

20. The method of any of claims 12-19 wherein the end portion of the filter (42) and the end portion of the core (10) are inserted into the liquid bonding material at the same time.

21. The method of any of claims 12-20 wherein arranging the outer wall (20) of the core (10) to support the inner periphery of the filter (42) includes positioning the outer wall (20) and the inner periphery of the filter (42) in contact with one another.

22. A filter element comprising a filter (42), a cage (60), and an end cap (41), wherein the filter (42) has an end portion, an outer periphery, and an outer diameter, the cage (60) has an end portion and is disposed around the filter (42), and the end cap (41) and the end portion of the filter (42) are joined at a bond by a bonding material, **characterized in that** the end portion of the cage (60) includes an inner wall (63), an outer wall (64) and a recess (65) between the inner wall (63) and the outer wall (64), wherein solidified bonding material (40) is disposed in the recess (65) and wherein the inner wall (63) has an inner diameter that corresponds to the outer diameter of the filter (42) and the outer periphery of the filter (42) is supported near the bond by the inner wall (63) of the cage (60).

23. The filter element of claim 22 wherein the outer periphery of the filter (42) contacts the inner wall (63) of the cage (60) at the bond.

24. The filter element of claim 22 or 23 wherein the cage (60) is bonded to the end cap (41).

25. The filter element of claim 22 or 23 wherein the cage (60) is not bonded to the end cap (41).

26. The filter element of any of claims 22-25 wherein the inner wall (63) is continuous.

27. The filter element of any of claims 22-26 wherein the end portion of the cage (60) further includes an interlock arrangement (72).

28. The filter element of claim 27 wherein the interlock arrangement (72) and the solidified bonding material (40) in the recess (65) are arranged to prevent relative movement between the cage (60) and the end cap (41) in the circumferential direction.

29. A method of making a filter element comprising:
inserting an end portion of a filter (42) into a liquid bonding material of an end cap (41)
inserting an inner wall (63) of a first end portion of a cage (60) into the liquid bonding material of the end cap (41), including directing liquid bonding material into a recess (65) between the inner wall (63) and an outer wall (64) of the cage (60);
bonding the end portion of the filter (42) to the end cap (41); and
arranging the inner wall (63) of the cage (60) to support the outer periphery of the filter (42) near the bond.

30. The method of claim 29 further comprising forming the liquid bonding material by melting a portion of the end cap (41).

31. The method of claim 30 further comprising forming the liquid bonding material by applying a potting material to the end cap (41).

32. The method of claim 29,30, or 31 further comprising solidifying bonding material (40) in the recess (65) of the cage (60).

33. The method of claim 32 wherein solidifying the bonding material (40) in the recess (65) includes solidifying bonding material adjacent to an interlock arrangement (72).

34. The method of any of claims 29-33 further comprising bonding the cage (60) to the end cap (41).

35. The method of any of claims 29-33 further comprising not bonding the cage (60) to the end cap (41).

36. The method of any of claims 29-35 wherein the end portion of the filter (42) and the end portion of the cage (60) are inserted into the liquid bonding material at the same time.

37. The method of any of claims 29-36 wherein arranging the inner wall (63) to support the outer periphery of the filter (42) includes positioning the inner wall (63) and the outer periphery of the filter (42) in contact with one another.

## Patentansprüche

1. Filterelement, umfassend ein Hohlfilter (42), einen Kern (10) und eine Endkappe (41), wobei das Filter (42) einen Endbereich, eine innere Peripherie und einen Innendurchmesser aufweist, wobei der Kern (10) einen Endbereich aufweist und in dem Filter (42) angeordnet ist, und wobei die Endkappe (41) und der Endbereich des Filters (42) an einer Verbindung mittels eines Bindematerials verbunden sind, **dadurch gekennzeichnet, dass** der Endbereich des Kerns (10) eine Außenwand (20) mit einem verschmälerten Rand, einen Außendurchmesser, der zu dem Innendurchmesser des Filters (42) korrespondiert, und eine innere Oberfläche (22), die einen Rücksprung (14) bildet, umfasst, wobei die innere Peripherie des Filters (42) in der Nähe der Verbindung von der Außenwand (20) des Kerns (10) gestützt wird und verfestigtes Bindematerial (40) in dem Rücksprung (14) angeordnet ist.

2. Filterelement nach Anspruch 1, wobei die innere Peripherie des Filters (42) an der Verbindung mit der Außenwand (20) des Kerns (10) in Kontakt steht.

3. Filterelement nach einem der vorstehenden Ansprüche, wobei der Kern (10) an die Endkappe (41) gebunden ist.

4. Filterelement nach Anspruch 1 oder 2, wobei der Kern (10) nicht an die Endkappe (41) gebunden ist.

5. Filterelement nach einem der vorstehenden Ansprüche, wobei der Endbereich des Kerns (10) ferner eine Innenwand (21) umfasst und wobei der Rücksprung (14) zwischen der Außenwand (20) und der Innenwand (21) positioniert ist.

6. Filterelement nach einem der vorstehenden Ansprüche, wobei der Rücksprung (14) an der Endfläche des Kerns (10) ohne Begrenzung ist.

7. Filterelement nach einem der vorstehenden Ansprüche, wobei die Außenwand (20) kontinuierlich ist.

8. Filterelement nach einem der vorstehenden Ansprüche, wobei der Endbereich des Kerns (10) ferner eine mit dem Rücksprung (14) in Verbindung stehende Entlüftung (25) umfasst.

9. Filterelement nach einem der vorstehenden Ansprüche, wobei der Endbereich des Kerns (10) ferner eine Verriegelungsanordnung (30) umfasst.

10. Filterelement nach Anspruch 9, wobei die Verriegelungsanordnung (30) und das verfestigte Bindematerial (40) in dem Rücksprung (14) angeordnet sind zum Verhindern einer Relativbewegung zwischen dem Kern (10) und der Endkappe (41) in Umfangsrichtung.

11. Filterelement nach einem der vorstehenden Ansprüche, wobei die innere Oberfläche (22) der Außenwand (20) sich zu dem verschmälerten Rand verjüngt.

12. Verfahren zur Herstellung eines Filterelementes, umfassend:
Einführen eines Endbereichs eines Filters 42 in ein flüssiges Bindematerial einer Endkappe (41);
Einführen eines verschmälerten Randes einer Außenwand (20) eines Endbereichs eines Kerns (10) in das flüssige Bindematerial der Endkappe (41), einschließlich des Leitens von flüssigem Bindematerial in einen von einer inneren Oberfläche (22) der Außenwand (20) gebildeten Rücksprung (14);
Binden des Endbereichs des Filters (42) an die Endkappe (41); und
Anordnen der Außenwand (20) des Kerns (10) zum Stützen einer inneren Peripherie des Filters (42) in der Nähe der Verbindung.

13. Verfahren nach Anspruch 12, ferner umfassend das Bilden des flüssigen Bindematerials durch Schmelzen eines Bereichs der Endkappe (41).

14. Verfahren nach Anspruch 12, ferner umfassend das Bilden des flüssigen Bindematerials durch Aufbringen eines Einbettungsmaterials auf die Endkappe (41).

15. Verfahren nach Anspruch 12, 13 oder 14, ferner umfassend das Verfestigen von Bindematerial (40) in dem Rücksprung (14) des Kerns (10).

16. Verfahren nach Anspruch 15, wobei das Verfestigen von Bindematerial das Verfestigen von Bindematerial benachbart zu einer Verriegelungsanordnung (30) umfasst.

17. Verfahren nach einem der Ansprüche 12-16, ferner umfassend das Binden des Kerns (10) an die Endkappe (41).

18. Verfahren nach einem der Ansprüche 12-16, ferner umfassend das Nicht-Binden des Kerns (10) an die Endkappe (41).

19. Verfahren nach einem der Ansprüche 12-18, ferner umfassend das Entlüften von Gas aus dem Rücksprung (14) des Kerns (10) beim Leiten des flüssigen Bindematerials in den Rücksprung (14).

20. Verfahren nach einem der Ansprüche 12-19, wobei der Endbereich des Filters (42) und der Endbereich des Kerns (10) gleichzeitig in das flüssige Bindematerial eingeführt werden.

21. Verfahren nach einem der Ansprüche 12-20, wobei das Anordnen der Außenwand (20) des Kerns (10) zum Stützen der inneren Peripherie des Filters (42) das Positionieren der Außenwand (20) und der inneren Peripherie des Filters (42) in Kontakt miteinander umfasst.

22. Filterelement, umfassend ein Filter (42), einen Käfig (60) und eine Endkappe (41), wobei das Filter (42) einen Endbereich, eine äußere Peripherie und einen Außendurchmesser aufweist, wobei der Käfig (60) einen Endbereich aufweist und um das Filter (42) herum angeordnet ist, und wobei die Endkappe (41) und der Endbereich des Filters (42) an einer Verbindung mittels eines Bindematerials verbunden sind, **dadurch gekennzeichnet, dass** der Endbereich des Käfigs (60) eine Innenwand (63), eine Außenwand (64) und einen Rücksprung (65) zwischen der Innenwand (63) und der Außenwand (64) umfasst, wobei verfestigtes Bindematerial (40) in dem Rücksprung (65) angeordnet ist und wobei die Innenwand (63) einen Innendurchmesser aufweist, der zu dem Außendurchmesser des Filters (42) korrespondiert, und wobei die äußere Peripherie des Filters (42) in der Nähe der Verbindung von der Innenwand (63) des Käfigs (60) gestützt wird.

23. Filterelement nach Anspruch 22, wobei die äußere Peripherie des Filters (42) an der Verbindung mit der Innenwand (63) des Käfigs (60) in Kontakt steht.

24. Filterelement nach Anspruch 22 oder 23, wobei der Käfig (60) an die Endkappe (41) gebunden ist.

25. Filterelement nach Anspruch 22 oder 23, wobei der Käfig (60) nicht an die Endkappe (41) gebunden ist.

26. Filterelement nach einem der Ansprüche 22-25, wobei die Innenwand (63) kontinuierlich ist.

27. Filterelement nach einem der Ansprüche 22-26, wobei der Endbereich des Käfigs (60) ferner eine Verriegelungsanordnung (72) aufweist.

28. Filterelement nach Anspruch 27, wobei die Verriegelungsanordnung (72) und das verfestigte Bindematerial (40) in dem Rücksprung (65) angeordnet sind zum Verhindern einer Relativbewegung zwischen dem Käfig (60) und der Endkappe (41) in Umfangsrichtung.

29. Verfahren zur Herstellung eines Filterelementes, umfassend:
Einführen eines Endbereichs eines Filters (42) in ein flüssiges Bindematerial einer Endkappe (41);
Einführen einer Innenwand (63) eines ersten Endbereichs eines Käfigs (60) in das flüssige Bindematerial der Endkappe (41), einschließlich des Leitens von flüssigem Bindematerial in einen Rücksprung (65) zwischen der Innenwand (63) und einer Außenwand (64) des Käfigs (60);
Binden des Endbereichs des Filters (42) an die Endkappe (41); und
Anordnen der Innenwand (63) des Käfigs (60) zum Stützen der äußeren Peripherie des Filters (42) in der Nähe der Verbindung.

30. Verfahren nach Anspruch 29, ferner umfassend das Bilden des flüssigen Bindematerials durch Schmelzen eines Bereichs der Endkappe (41).

31. Verfahren nach Anspruch 30, ferner umfassend das Bilden des flüssigen Bindematerials durch Aufbringen eines Einbettungsmaterials auf die Endkappe (41).

32. Verfahren nach Anspruch 29, 30 oder 31, ferner umfassend das Verfestigen von Bindematerial (40) in dem Rücksprung (65) des Käfigs (60).

33. Verfahren nach Anspruch 32, wobei das Verfestigen des Bindematerials (40) in dem Rücksprung (65) das Verfestigen von Bindematerial benachbart zu einer Verriegelungsanordnung (72) umfasst.

34. Verfahren nach einem der Ansprüche 29-33, ferner umfassend das Binden des Käfigs (60) an die Endkappe (41).

35. Verfahren nach einem der Ansprüche 29-33, ferner umfassend das Nicht-Binden des Käfigs (60) an die Endkappe (41).

36. Verfahren nach einem der Ansprüche 29-35, wobei der Endbereich des Filters (42) und der Endbereich des Käfigs (60) gleichzeitig in das flüssige Bindematerial eingeführt werden.

37. Verfahren nach einem der Ansprüche 29-36, wobei das Anordnen der Innenwand (63) zum Stützen der äußeren Peripherie des Filters (42) das Positionieren der Innenwand (63) und der äußeren Peripherie des Filters (42) in Kontakt miteinander umfasst.

## Revendications

1. Elément de filtre comportant un filtre creux (42), un noyau (10), et un bouchon d'extrémité (41), le filtre (42) ayant une partie d'extrémité, une périphérie intérieure, et un diamètre intérieur, le noyau (10) ayant une partie d'extrémité et étant disposé dans le filtre (42), et le bouchon d'extrémité (41) et la partie d'extrémité du filtre (42) étant reliés au niveau d'une liaison par une matière de liaison, **caractérisé en ce que** la partie d'extrémité du noyau (10) comprend une paroi extérieure (20) ayant un bord rétréci, un diamètre extérieur qui correspond au diamètre intérieur du filtre (42), et une surface intérieure (22) qui forme un renfoncement (14), la périphérie intérieure du filtre (42) étant supportée près de la liaison par la paroi extérieure (20) du noyau (10) et une matière de liaison solidifiée (40) étant disposée dans le renfoncement (14).

2. Elément de filtre selon la revendication 1, dans lequel la périphérie intérieure du filtre (42) est en contact avec la paroi extérieure (20) du noyau (10) au niveau de la liaison.

3. Elément de filtre selon l'une quelconque des revendications précédentes, dans lequel le noyau (10) est collé sur le bouchon d'extrémité (41).

4. Elément de filtre selon la revendication 1 ou 2, dans lequel le noyau (10) n'est pas collé sur le bouchon d'extrémité (41).

5. Elément de filtre selon l'une quelconque des revendications précédentes, dans lequel la partie d'extrémité du noyau (10) comprend en outre une paroi intérieure (21) et le renfoncement (14) est positionné entre la paroi extérieure (20) et la paroi intérieure (21).

6. Elément de filtre selon l'une quelconque des revendications précédentes, dans lequel le renfoncement (14) n'est pas délimité au niveau de la face d'extrémité du noyau (10).

7. Elément de filtre selon l'une quelconque des revendications précédentes, dans lequel la paroi extérieure (20) est continue.

8. Elément de filtre selon l'une quelconque des revendications précédentes, la partie d'extrémité du noyau (10) comprenant en outre une mise à l'air libre (25) qui communique avec le renfoncement (14).

9. Elément de filtre selon l'une quelconque des revendications précédentes, dans lequel la partie d'extrémité du noyau (10) comprend en outre un agencement de blocage (30).

10. Elément de filtre selon la revendication 9, dans lequel l'agencement de blocage (30) et la matière de liaison solidifiée (40) dans le renfoncement (14) sont engagés afin d'empêcher un mouvement relatif entre le noyau (10) et le bouchon d'extrémité (41) dans la direction circonférentielle.

11. Elément de filtre selon l'une quelconque des revendications précédentes, dans lequel la surface intérieure (22) de la paroi extérieure (20) est conique jusqu'au bord rétréci.

12. Procédé de fabrication d'un élément de filtre comportant le fait de :
insérer une partie d'extrémité d'un filtre (10) dans une matière de liaison liquide d'un bouchon d'extrémité (41);
insérer un bord rétréci d'une paroi extérieure (20) d'une partie d'extrémité d'un noyau (10) dans la matière de liaison liquide du bouchon d'extrémité (41), incluant le fait de diriger la matière de liaison liquide dans un renfoncement (14) formé par une surface intérieure (22) de la paroi extérieure (20);
lier la partie d'extrémité du filtre (42) au bouchon d'extrémité (41); et
disposer la paroi extérieure (20) du noyau (10) afin de supporter une périphérie intérieure du filtre (42) près de la liaison.

13. Procédé selon la revendication 12, comportant en outre le fait de former la matière de liaison liquide en faisant fondre une partie du bouchon d'extrémité (41).

14. Procédé selon la revendication 12, comprenant en outre le fait de former la matière de liaison liquide en appliquant une matière de mastic sur le bouchon d'extrémité (41).

15. Procédé selon la revendication 12, 13 ou 14, comportant en outre le fait de solidifier la matière de liaison dans le renfoncement (14) du noyau (10).

16. Procédé selon la revendication 15, selon lequel la solidification de la matière de liaison comprend le fait de solidifier la matière de liaison de façon adjacente à un agencement de blocage (30).

17. Procédé selon l'une quelconque des revendications 12 à 16, comprenant en outre le fait de lier le noyau (10) au bouchon d'extrémité (41).

18. Procédé selon l'une quelconque des revendications 12 à 16, comprenant en outre le fait de ne pas lier le noyau (10) au bouchon d'extrémité (41).

19. Procédé selon l'une quelconque des revendications 12 à 18, comprenant en outre le fait de mettre à l'air libre du gaz du renfoncement (14) du noyau (10) lorsque la matière de liaison liquide est dirigée dans le renfoncement (14).

20. Procédé selon l'une quelconque des revendications 12 à 19, selon lequel la partie d'extrémité du filtre (42) et la partie d'extrémité du noyau (10) sont insérées dans la matière de liaison liquide en même temps.

21. Procédé selon l'une quelconque des revendications 12 à 20, selon lequel le fait de disposer la paroi extérieure (20) du noyau (10) afin de supporter la périphérie intérieure du filtre (42) comprend le fait de positionner la paroi extérieure (20) et la périphérie intérieure du filtre (42) en contact l'une avec l'autre.

22. Elément de filtre comportant un filtre (42), une cage (60), et un bouchon d'extrémité (41), le filtre (42) ayant une partie d'extrémité, une périphérie extérieure, et un diamètre intérieur, la cage (60) ayant une partie d'extrémité et étant disposée autour du filtre (42), et le bouchon d'extrémité (41) et la partie d'extrémité du filtre (42) étant reliés au niveau d'une liaison par une matière de liaison, **caractérisé en ce que** la partie d'extrémité de la cage (60) comprend une paroi intérieure (63), une paroi extérieure (64) et un renfoncement (65) entre la paroi intérieure (63) et la paroi extérieure (64), une matière de liaison solidifiée (40) étant disposée dans le renfoncement (65) et la paroi intérieure (63) ayant un diamètre intérieur qui correspond au diamètre extérieur du filtre (42) et la périphérie extérieure du filtre (42) étant supportée près de la liaison par la paroi intérieure (63) de la cage (60).

23. Elément de filtre selon la revendication 22, dans lequel la périphérie extérieure du filtre (42) vient en contact avec la paroi intérieure (63) de la cage (60) au niveau de la liaison.

24. Elément de filtre selon la revendication 22 ou 23, dans lequel la cage (60) est liée au bouchon d'extrémité (41).

25. Elément de filtre selon la revendication 22 ou 23, dans lequel la cage (60) n'est pas liée au bouchon d'extrémité (41).

26. Elément de filtre selon l'une quelconque des revendications 22 à 25, dans lequel la paroi intérieure (63) est continue.

27. Elément de filtre selon l'une quelconque des revendications 22 à 26, dans lequel la partie d'extrémité de la cage (60) comprend en outre un agencement de blocage (72).

28. Elément de filtre selon la revendication 27, dans lequel l'agencement de blocage (72) et la matière de liaison solidifiée (40) dans le renfoncement (65) sont prévus pour empêcher un mouvement relatif entre la cage (60) et le bouchon d'extrémité (41) dans la direction circonférentielle.

29. Procédé de fabrication d'un élément de filtre comportant le fait de :
insérer une partie d'extrémité d'un filtre (42) dans une matière de liaison liquide d'un bouchon d'extrémité (41);
insérer une paroi intérieure (63) d'une première partie d'extrémité d'une cage (60) dans la matière de liaison liquide du bouchon d'extrémité (41), incluant le fait de diriger la matière de liaison liquide dans un renfoncement (65) entre la paroi intérieure (63) et une paroi extérieure (64) de la cage (60);
lier la partie d'extrémité du filtre creux (42) au bouchon d'extrémité (41); et
disposer la paroi intérieure (63) de la cage (60) afin de supporter la périphérie extérieure du filtre (42) près de la liaison.

30. Procédé selon la revendication 29, comprenant en outre le fait de former la matière de liaison liquide en faisant fondre une partie du bouchon d'extrémité (41).

31. Procédé selon la revendication 30, comprenant en outre le fait de former la matière de liaison liquide en appliquant une matière de mastic sur le bouchon d'extrémité (41).

32. Procédé selon la revendication 29, 30 ou 31, comprenant en outre le fait de solidifier la matière de liaison (40) dans le renfoncement (65) de la cage (60).

33. Procédé selon la revendication 32, selon lequel la solidification de la matière de liaison (40) dans le renfoncement (65) comprend le fait de solidifier la matière de liaison de façon adjacente à un agencement de blocage (72).

34. Procédé selon l'une quelconque des revendications 29 à 33, comportant en outre le fait de lier la cage (60) au bouchon d'extrémité (41).

35. Procédé selon l'une quelconque des revendications 29 à 33, comportant en outre le fait de ne pas lier la cage (60) au bouchon d'extrémité (41).

36. Procédé selon l'une quelconque des revendications 29 à 35, selon lequel la partie d'extrémité du filtre creux (42) et la partie d'extrémité de la cage (60) sont insérées dans la matière de liaison liquide en même temps.

37. Procédé l'une quelconque des revendications 29 à 36, selon lequel le fait de disposer la paroi intérieure (63) afin de supporter la périphérie extérieure du filtre (42) comprend le fait de positionner la paroi intérieure (63) et la périphérie extérieure du filtre (42) en contact l'une avec l'autre.
